# EUROPEAN PATENT APPLICATION

(11) **EP 1 672 867 A1**
(43) Date of publication of application: **21.06.2006**
(21) Application number: 04425921.6
(22) Date of filing: 15.12.2004
(51) Int. Cl.: H04L 29/06

(54) **Method to the fast and reliable transfer of large amount of data between mobile radio users involved in a SIP session**

(71) Applicant: Siemens S.p.A., 20126 Milano (IT)
(72) Inventor: De Zen, Giovanna, 31011 Asolo (TV) (IT); Marfia, Gustavo, 56021 Cascina (IT)

(57) **Abstract**

A new Push To Send Protocol (PTSP) living during a SIP session [RFC3261] is proposed to transfer files 50-200 kbytes long between cellular phones in a fast and reliable manner. The SIP session is firstly established between an inviter User A (MT A) intentioned to transfer one or more files to a User B (MT B) upon pushing a button on the cellular phone of the sender. The SDP body [RFC2327] of the SIP INVITE / 200 OK messages is used to exchange extended capabilities also including: a new media type named "file", the transport port to which the media stream will be sent, the used TCP transport protocol, and the media formats. The Call-ID value set at the establishment the SIP session is used in the exchange of contents as a temporary key for authentication reasons. In case more than one file is exchanged, a boundary string is provided between adjacent files. If user B agrees to the invite for one or more selected contents, an unique PTSP GET request message is sent to the User A in order to get the whole content/s from the inviter via the negotiated TCP socket with reference to both a given PTSP version and the former Call-ID value. The Inviter checks the received Call-ID to either deny or accept the connection. In case of acceptance, the inviter send a PTSP 200 OK response message including in its body the multimedia content/s expected by the recipient. In case the file/s is/are sent to more than one recipient a new Multiparty Video Messaging Server (MVM) is included in the IMS domain. The PTSP 200 OK response includes a value in the Expires header indicating how long the content that is transferred is valid. Once the recipient completes the download of content/s, it sends a SIP BYE request to close the SIP session, the closure of the socket is anyway performed after the timeout in the Expires header has elapsed.

## Description

### FIELD OF THE INVENTION

The present invention relates to the field of the PLMN networks connected to the IP domain, and more precisely to a method to the fast and reliable transfer of large amount of data between mobile radio users involved in a SIP session. Essential for implementing the invention is a PLMN with PS domain connected to the IP network. As a consequence, targeting the preferred embodiment for a 3GPP PLMN connected to IP through the IMS platform, is not a limitation for the present invention.

To help the understanding of the description, a list of used acronyms and bibliographic references are given at the end.

### BACKGROUND ART

Nowadays a large integration between IP and PLMN networks is under way to the benefit of wireless customers who may enjoy a lot of attractions offered by IP over traditional telecommunications protocols and in meanwhile experiencing "seamless" communications over the different types of networks which their calls may pass. This facilitates a wide diversity of communications scenarios. Without limitation, afterward the PLMN is one described in 3GPP standardization. The core of the IP-PLMN integration is a 3GPP platform named IMS which has been introduced appositely to offer to the operators, the service providers, and the clients the sort of service capabilities that IP is designed to provide. The primary focus of the IMS platform is that to provide the users/clients with the ability to join multimedia session in which they are allowed to send and receive voice and data communications even when roaming. The use of IMS in 3G systems will be optional, but is expected to be seen by operators as an attractive choice for enhancing 3G packet mode operation. The IMS will use the emerging IP version 6 (IPv6) together with SIP protocol for the establishment of sessions and the service provisioning on mobile networks. SIP is an application-layer control (signalling) protocol for creating, modifying and terminating sessions with two or more participants. These sessions include Internet multimedia conferences, Internet telephone calls, presence service and multimedia distribution, etc. SIP supports user mobility by proxying and redirecting requests to the user's current location. For more details see **[RFC3261]** at the end. For the same purpose **[TS_22.228]** identifies the necessary requirements from the user point of view. Concerning SIP these brief notices are introductory: SIP is based on an HTTP-like request/response transaction model; each SIP transaction consists of a request that invokes a particular method, or function, on the server and at least one response. A header is a component of a SIP message that conveys information about the message, it is structured as a sequence of header fields. Header fields are named attributes that provide additional information about a message. The details of the session, such as the type of media, codec, or sampling rate, are not described using SIP. Rather, the body of a SIP message contains a description of the session, encoded in some other protocol format. One such format is the Session Description Protocol **[RFC2327]**. The SDP body is carried by the SIP message in a way that is analogous to a document attachment being carried by an email message, or a web page being carried in an HTTP message.

Different typologies of services are foreseen inside modern PLMNs, for example: traditional CS services like basic voice calls or conference; PS services like file transfer either end-to-end or multiparty; interactive PS like Voice over IP; or combinational services from the combination of CS and PS based services. From the services point of view, individual service profiles indicating service types and relevant QoS requirements belong to the subscriber capability information transferred to the network when the user is requesting dedicated resources for a new connection. File transfer inside a PLMN is a service aimed to transfer contents stored in the cellular phone of the sender to one or more users selected from a list of possible recipients. File transfer can be provided to agree with different requirements on delay (e.g.: near real-time or non-real time) depending on the nature of the application. Several strategies have been performed up to now for delivering contents inside mobile networks either of the 2^{nd} (2.5) or 3^{rd} generation. The oldest technique is SMS based on a store and forward mechanism used to transfer only text limited in length. MMS is the evolution of SMS to additionally convey sounds and images in a store and forward manner. Maximum length of a MMS content is not defined in standards but it is understood must be around 100 kbytes and may differ from MNO to MNO. Both SMS and MMS need not of the IMS platform but require the introduction of a respective network element (namely the SMS or the MMS Centre) and the relevant interfaces. Transfer of contents via IP has been considered in 3GPP and IETF ambits and some solutions have been proposed. The IETF SIMPLE working group defined the SIP MESSAGE **[RFC3428]** that may convey attachments and text. This message is thought for delivering contents in the form of short MIME body part in near real-time fashion, according to the so called Instant Messaging that can avail of Push mechanisms. This solution has been tested on 3G Mobile Networks, but issues concerning traffic load and transmission reliability showed this message not appropriate to transfer large files either in near real-time or non real-time manner.

Message Session Relay Protocol (MSRP) is the IETF work in progress to define a near real-time connection-oriented protocol for exchanging arbitrary (binary) MIME contents end-to-end; see: http//www.draft-ietf-simple-message-sessions-08.txt for MSRP and http//www.draft-iett-simple-msrp-relays-01.txt for an extension aimed to introduce Relays intermediaries to the end-to-end connections. The MSRP provides a mechanism for transmitting a series of Instant Messages within a MSRP session. MSRP sessions are managed using the SDP offer/answer model carried by a signalling protocol such as SIP. An example of MSRP session follows hereafter (some lines are removed for clarity and brevity) where a SIP user agent (Alice) sends the other (Bob) a SIP invitation containing an offer session description which includes a session of MSRP. The receiving SIP user agent can accept the invitation and include an answer session-description which acknowledges the choice of media. Alice's session description contains an MSRP URL that describes where she is willing to receive MSRP requests from Bob, and vice-versa.

### Alice sends to Bob:

INVITE sip:alice@atlanta.example.com SIP/2.0
To: <sip:bob@biloxi.example.com>
From: <sip:alice@atlanta.example.com>;tag=786
Call-ID: 3413an89KU
Content-Type: application/sdp
c=IN IP4 10.1.1.1
m=message 9 msrp *
a=accept-types:text/plain
a=path:msrp://atlanta.example.com:7654/jshA7we;tcp

### Bob sends to Alice:

SIP/2.0 200 OK
To: <sip:bob@biloxi.example.com>;tag=087js
From: <sip:alice@atlanta.example.com>;tag=786
Call-ID: 3413an89KU
Content-Type: application/sdp
c=IN IP4 10.2.2.2
m=message 9 msrp *
a=accept-types:text/plain
a=path: msrp://biloxi.example.com:12763/kjhd37s2s2;tcp

### Alice sends to Bob:

ACK sip:alice@atlanta.example.com SIP/2.0
To: <sip:bob@biloxi.example.com>;tag=087js
From: <sip:alice@atlanta.example.com>;tag=786
Call-ID: 3413an89KU

MSRP defines two request types, or methods. SEND requests are used to deliver a complete message or a chunk (a portion of a complete message), while REPORT requests report on the status of an earlier SEND request.
MSRP a786hjs2 SEND
To-Path: msrp://biloxi.example.com:12763/kjhd37s2s2;tcp
From-Path: msrp://atlanta.example.com:7654/jshA7we;tcp
Message-ID: 87652
Content-Type: text/plain
Hey Bob, are you there?
----a786hjs2$
MSRP a786hjs2 200 OK
To-Path: msrp://atlanta.example.com:7654/jshA7we;tcp
From-Path: msrp://biloxi.example.com:12763/kjhd37s2s2;tcp
Message-ID: 87652
-------a786hjs2$
At this point the exchange of MSRP messages could go on or be interrupted by the Alice or Bob, in this case a SIP BYE would tear down the session.

From this brief example it is possible to understand some peculiarities (and in some cases drawbacks) of the Message Sessions Relay Protocol:
- MSRP lives during a SIP session and behaves in a push style like a SIP MESSAGE.
- MSRP provides the means by which it is possible to exchange reliably several messages, but with a very limited content size. To insure fairness over a connection, senders must not send chunks with a body larger than 2048 octets, unless they are prepared to interrupt them. In order to send 200 kbytes of content with MSRP fragmentation would be required and approximately 100 MSRP messages should be sent. This process would naturally be paid in terms of performance and overhead.
- MSRP introduces a new MSRP URL from which a new level of address resolution is needed in the network.
- last MSRP extension devoted to support end-to-end communications between clients by means of an arbitrary number of Relay intermediaries, is charging each client with additional tasks, such as the identification of any relays acting on its behalf and the provision of appropriate credentials. Besides, Relays have to implement a complicated addressing mechanism to route messages and message delivery status to other relays and the clients. Due to the complicated addressing scheme the overhead of the sent messages is noticeably increased to the detriment of payload.

### OBJECTS OF THE INVENTION

The proposed invention is intended to overcome the drawbacks encountered by the protocols of the prior art faced to the problem of transferring large files between mobile terminals (e.g. UMTS terminals), and indicate a new method aimed to transfer contents via IP between mobile terminals in an end-to-end scenario. Objects of the proposed method are the following:
- Optimizing the use of available network bandwidth by reducing message overhead and decreasing the latency.
- Independency from content type.
- Using and extending available network protocols.
- Fast and reliable data transfer of one or more contents to one or more than one recipient.
- Opportunity for the recipient to decide whether accept or not all or only some of the files the sender is offering.
- Independency from any type of access network.
- Avoiding the introduction of a new URL to refer to the protocol.
- Avoiding the introduction of new network elements in the already standardized architectures.

### SUMMARY AND ADVANTAGES OF THE INVENTION

The invention achieves said objects by providing a method to transfer media contents between mobile terminals via IP, as disclosed in the claims.

The method of the invention is built up using known IP protocols together with a new protocol named Push To Send Protocol (PTSP) by the inventors themselves, which is defined in order to be as simple as possible. By virtue of the above combination, the fast and reliable transfer of large files between cellular phones is possible without the drawbacks of the prior art. The method of the invention makes use of:
- SIP protocol **[RFC3261]** to set up and tear down the communication sessions;
- SDP protocol **[RFC2327]** based on a simple offer/answer model to provide SIP (namely: INVITE request / 200 OK response) with basic negotiation capabilities;
- UDP protocol **[RFC0768]** to convey messages peer-to-peer;
- HTTP syntax **[RFC2616]** to convey a PTSP Request from a potential receiver to the file sender and formulate congruent Responses returned by the sender;
- TCP protocol **[RFC0793]** to carry out fast and reliable file transfer trough a pair of sockets at the two ends of the connection used to file transfer. The TCP port to be used being negotiated during the SIP session. Document **[RFC0793]** recites textually: *"To allow for many processes within* a *single Host to use TCP communication facilities simultaneously, the TCP provides a set of addresses or ports within each host. To identify the separate data streams that a TCP may handle, the TCP provides a port identifier. Since port identifiers are selected independently by each TCP they might not be unique. To provide for unique addresses within each TCP, we concatenate an internet address identifying the TCP with a port identifier to create a socket which will be unique throughout all networks connected together. A connection is fully specified by the pair of sockets at the ends. A local socket may participate in many connections to different foreign sockets. A connection can be used to carry data in both directions, that is, it is full-duplex".* On the other hand connection sharing is necessary for "fair" allocation of bandwidth in congestion situations.
The method of the invention includes the following three main steps:
a) SIP session setup as defined in [RFC3261] to introduce new capabilities useful for file transfer according to PTSP;
b) transfer of content/s according to PTSP;
c) SIP session teardown as usually executed.
The reasons that justify the establishment of a session in step a) are:
1. Use of the SIP addressing scheme, universally adopted from 3G Mobile Networks; the use of the SIP INVITE - 200 OK → ACK mechanism routes the first request to the intended callee.
2. Opportunity to initiate the session by pushing a button on the cellular phone or equivalent actions;
3. Opportunity to exchange capabilities between mobile terminals during the session establishment using SDP. Only a content that the mobile terminal is able to manage will be exchanged, unless otherwise stated by the user.
4. Negotiation of exchange parameters using SDP.
5. Opportunities that MNOs may have by controlling the sessions within this kind of traffic flow.
6. Creation of a Call Identity (Call-ID) value that will be used in the transfer of MIME contents as temporary key for authentication. According to [RFC3261] Call-ID contains a globally unique identifier for the relevant call (file transaction), generated by the combination of a random string and the host name or IP address. The combination of the To tag, From tag, and Call-ID completely defines a peer-to-peer SIP relationship between sender and receiver.
7. Creation, in case more than one file is sent, of a boundary string between two adjacent files.

According to the method of the invention, once the SIP session is established between an inviter User A intentioned to transfer a file to a User B, the latter formulates a PTSP GET request towards the inviter A to get the file. The GET request is formulated in HTTP fashion and for authentication reasons explicitly refers to the same Call-ID value set at the beginning of the SIP session establishment. The inviter User A, in case the received Call-ID has not the same value as the one set in the initial SIP INVITE request, will deny the connection. Otherwise the inviter acknowledges the request and the requester User B will be connected and the expected content will be transferred via TCP socket in step b). In case more than one file will be exchanged a boundary string sets the end of a file and the beginning of the subsequent. The boundary value is set in step a) during the initial exchange of capabilities between the two User Agents (UA); with that the recipient User B is able to decide whether accept or not all or only some files the sender is offering. The response to the GET request issued by User A and directed to the recipient User B includes a value in the Expires header indicating how long the content that is transferred is valid. Once the recipient user B completes the download of content/s, it closes the SIP session in step c) by sending a SIP BYE request to the inviter User A. The recipient User B will anyway perform the closure of the socket after a timeout has elapsed from the end of the sending of content.

According to another embodiment of the invention, one or more files are sent to more than one recipient selected from a buddy list. In this case the sender contacts a new Multiparty Video Messaging Server (MVMS) included in the IMS domain, inserting in the beginning of the INVITE method the SIP URIs of the wanted recipients. The content will be transferred to the MVMS to be delivered on request to each recipient it finds in the body of the SIP INVITE. The remaining interactions of the MVMS follow the rules that have already been defined.

At this point the following differences need to be highlighted between MSRP and PTSP protocol:
- While a large amount of small contents (nearly 2 kbytes long) is transferred within a MSRP session, the target content size within a PTSP transaction is in the range of 50-200 kbytes; for this reason all the issues concerning fragmentation and reliability are left to the underlying TCP protocol, with relief from the pure PTSP design.
- While the MSRP protocol behaves in a push style exactly like a SIP MESSAGE, the PTSP protocol resembles more the HTTP in its pull behaviour (GET request). By comparison the UAS for MSRP (and SIP MESSAGE method), to say the recipient, will become the UAC for PTSP, to say the sender.
- The PTSP protocol does not introduce a new URL and does not require any knowledge of its existence in the network (except for the case of forking messages. A PTSP request is sent in a peer-to-peer fashion to the IP address set in the SDP exchange, and the same is for the response.
- The Expires header concept, in particular, is completely new to the MSRP protocol.

From the above analysis we may conclude that the two protocols MSRP and PTSP, despite both are living during a SIP session, they address different issues and work differently one from the other. The gained advantages derived from PTSP are lower transfer time experienced by the users compared to MMS and MSRP together with better performances and control over file transfer.

### BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:
- **fig.1** depicts a possible network scenario for implementing file transfer between mobile users according to the method of the present invention;
- **fig.2** shows the functional configuration of the IMS described in **[TS_23.002]** upgraded according to a multiparty embodiment of the present invention;
- **fig.3** shows a simplified message flow according to the method of the present invention used to transfer one or more files from an User A to an User B through the scenario of fig.1.

### DETAILED DESCRIPTION OF SOME PREFERRED EMBODIMENTS OF THE INVENTION

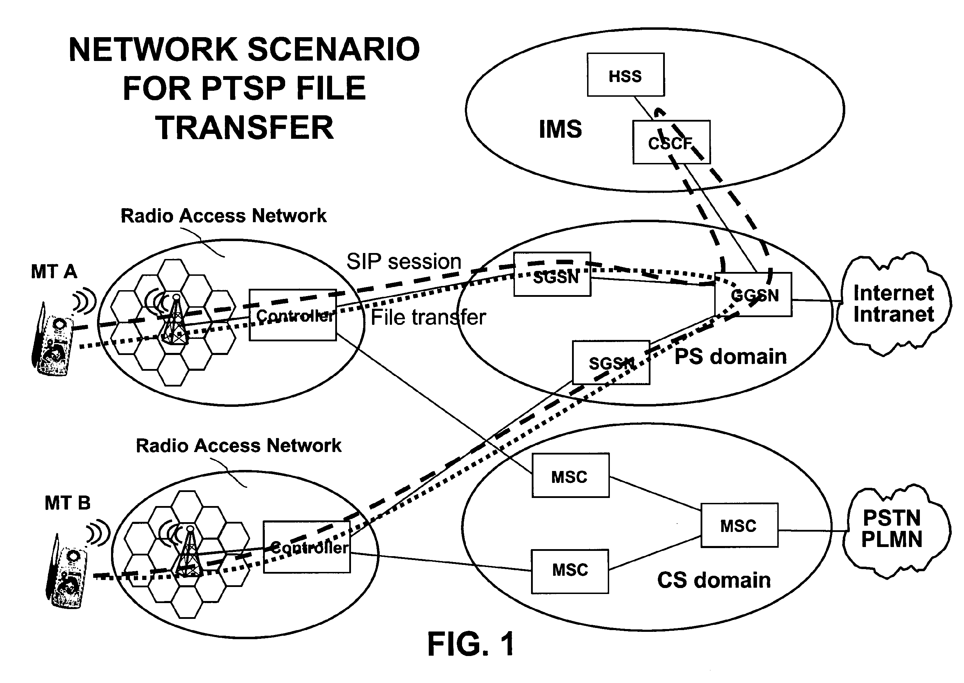

**Fig.1** shows a simplified communication scenario including a PLMN network interconnected to a PSTN, another PLMN, Internet and Intranet. Without limitations the architecture depicted in fig.1 can be largely derivable from 3GPP Technical Specifications (TS), also considering the consolidated IETF RFCs. The PLMN is subdivided into a Core Network (CN) connected to two Radio Access Networks of UTRAN type for two respective Mobile Terminals MT A and MT B. The Core Network includes the CS domain, the PS domain based on GPRS, and IMS connected to the PS domain. The Access Network includes a plurality of serving cells each of them corresponding to the coverage area generated by a respective Base Station. All the Base Stations inside an Access Network are connected to a common Controller able to handle both Circuit Switched calls and Packet Data transmissions in parallel. Inside the Core Network the CS domain includes two levels of cascaded MSCs network elements; at the first level the MSCs are connected to respective Controllers belonging to different Access Networks through as many CS paths and interfaces; at the second level a single MSC is connected to the PSTN and to another PLMN. The PS domain includes two SGSN network elements connected to respective Controllers belonging to different Access Networks through as many PS paths and interfaces. The two SGSNs are connected to a single GGSN network element, in its turn connected to the Internet network and to a CSCF functional block inside the IMS domain. Inside the IMS domain the CSCF is connected at least to a functional block named HSS. Although not resulting from the figure, CS domain and PS domain are not disjoint but opportunely interfaced to each other. CS domain is not involved with the present invention.

Impressed on the figure two curves are independently departing from either mobile terminal MT A or MT B and arriving to the other for indicating the paths respectively taken by data and IMS signalling. The dotted line representing data crosses in the order: the Base Station of the serving cell hosting the sender and the Controller, a first SGSN inside the PS domain, the GGSN, a second SGSN connected to the Controller inside the Access Network of arrival, and the Base Station of the serving cell hosting the recipient. The dashed line representing the IMS signalling is constituted by the previous path from the mobile terminal of the sender a signalling message to GGSN, a tract from GGSN to the CSCF block inside the IMS domain, the return tract from CSCF to GGSN, and the previous return path from GGSN and the mobile terminals of the recipient.

The scenario depicted in **fig.1** is suitable to be implemented by different types of PLMNs, although outside the Access Networks the elements are referred to 3GPP specifications (presently including GSM-GPRS). For the sake of simplicity the implementation of fig.1 will be only briefly described for a 3G PLMN, but this is not to be considered as a limitation for a 2,5G PLMN. With reference to **fig.1** the Radio Access Network is UTRAN and the Controller is RNC. UTRAN includes many Node Bs connected to a common RNC by means of the lub interface. Node B includes a Base Station connected to all served mobile terminals through the Uu radio interface. RNC is connected to SGSN by means of the lu(PS) interface and to MSC by means of the lu(CS) interface. UTRAN constitutes a Radio Network Subsystem (RNS) disclosed in **TS 23.110**. SGSN is connected to GGSN by means of the Gn interface. GGSN is connected to the IMS/CSCF by means of the Gi interface. Inside CS domain the MSCs are connected together and to the external world by means of the A interface.

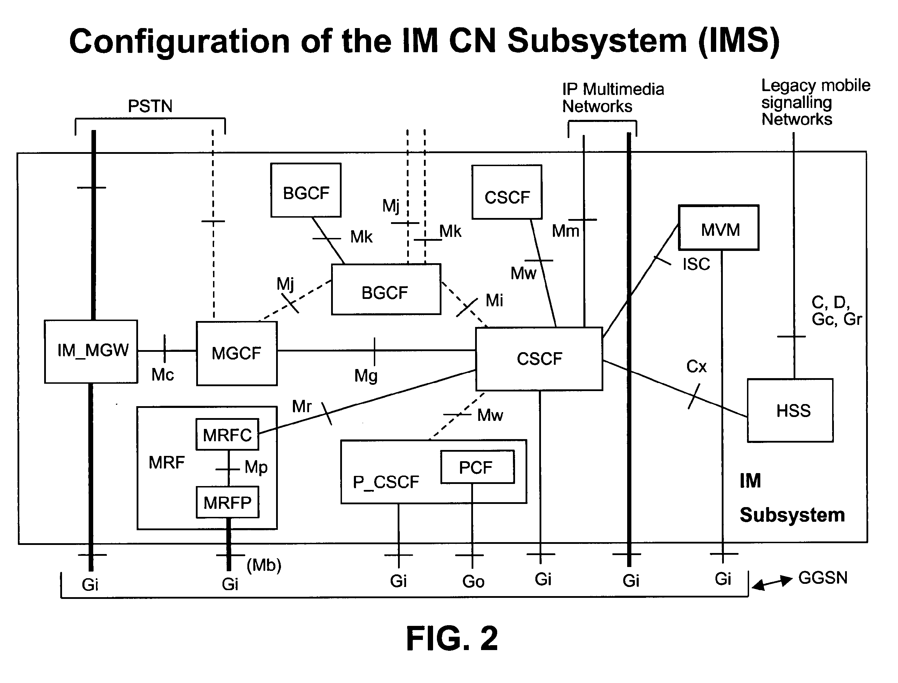

**Fig.2** shows a detailed representation of the IMS domain of the preceding figure. The functional PLMN architecture standardized by 3GPP (Release 5) is upgraded for the aim of the invention. In the figure, thick lines indicate interfaces supporting user traffic, while dashed lines indicate interfaces supporting only signalling. The reference architecture for IMS subsystem can be found in **[TS_23.002].** An exhaustive description of the involved entities can be found in **[TS_23.228].** The configuration of **fig.2** is a "Logical Model" introduced by 3GPP to define an abstract view of a network by means of information objects representing network elements, aggregations of network elements, the topological relationship between the elements, endpoints of connections (termination points), and transport entities (such as connections) that transport information between two or more termination points. The information objects defined in the Logical Model are used, among others, by connection management functions. In this way a physical implementation independent management is achieved. A Network Element is defined as a discrete telecommunications entity which can be managed over a specific interface.

With reference to **fig.2,** the IMS representation includes the following functional blocks: IM_MGW, MGCF, CSCF, P_CSCF, PCF, BGCF, MRF, and HSS. The following reference points (interfaces): Mb, Mc, Mg, Mr, Mw, Mi, Mj, Mk, Mm, Cx, C, D, Gi, Go, Gc, and Gr are specified between the various blocks, as indicated in the figure. In operation, the IM subsystem refers to the set of CN entities using the service provided by the PS domain to offer multimedia services. The CSCF element can act in the following three ways: Presence-CSCF (P-CSCF), Interrogating-CSCF (I-CSCF), Serving-CSCF (S-CSCF). The P-CSCF is the first point of contact for an end-user device when the IMS is contacted from inside the same administrative domain as the IMS. The P-CSCF:
- forward SIP messages;
- translate IDs other than SIP URI into SIP URls;
- maintain a security association between itself and each UE.
The I-CSCF is the first contact point, when the IMS is contacted by an IMS of another administrative domain. The I-CSCF:
- forward SIP messages;
- obtain from the HSS the address of the S-CSCF;
- conceal the internal network configuration, capacity, and topology.
The serving S-CSCF performs session control and service triggering. The S-CSCF:
- act as registrar (a server that accepts register requests);
- forward SIP messages;
- interact with an application server (AS - not indicated);
- authenticate according to HSS/UMTS data;
- support a proprietary authentication mechanism based on AKA;
- generate CDR.
The HSS is a database which contains IMS subscriber-related information. This database includes data for:
- Identification;
- authorized services;
- subscribed services.
The IM-MGW performs controls over bearers: it may terminate bearer channels from a CS network or media streams from a packet network (RTP streams in IP networks), performs media conversion (optional), process the payload (e.g. codec, echo canceller, conference bridge) and interworks with MGCF for the resource control.
The MGCF selects and communicates with appropriate CSCFs in order to control the part of the call state that belongs to connection control for media channels in an IM-MGW. It also communicates with IM-MGW (out of band signalling) and performs protocol conversion between ISUP (ISDN User Part) and the protocols of IM subsystem.
The BGCF block selects the network in which PSTN breakout is to occur. If it determines that the breakout is to occur in the same network in which the BGCF is located within, then the BGCF shall select a MGCF which will be responsible for the interworking with the PSTN. Otherwise the BGCF will forward this session signaling to another BGCF or an MGCF. Moreover the BGCF can generate CDRs.
The MRF (Multimedia Resource Function) is split into two entities called MRF Controller (MRFC) and MRF Processor (MRFP) with a Mp reference point between them. The following tasks have been identified by 3GPP for these two blocks.
The MRFC:
- interfaces the S-CSCF through the Mr interface using SIP protocol;
- controls the media stream resources in the MRFP;
- interprets information coming from AS and S-CSCF (e.g., session identifier) and controls MRFP accordingly;
- generates CDRs.
The MRFP:
- controls bearers on the Mb reference point;
- provides resources to be controlled by the MRFC;
- mixes incoming media streams (e.g., for multiple parties);
- sources media streams (for multimedia announcements);
- processes media streams (e.g., audio transcoding, media analysis);
- duplicates data packets.
The MVM is a Multiparty Video Messaging AS which duplicates the file to be transferred point-to-multipoint and delivers the duplicated files to each invited recipient. MVM operation will be detailed later on.

In operation, the IMS platform of **fig.2** provides the following capabilities:
- Access control: the IMS must be able to verify at any time if the user is allowed to use the resources of IMS.
- Capability negotiation: the IP multimedia applications must have the possibility to identify and select the available media components and the QoS of the sessions. The IM subsystem must allow such negotiations to be started from any party (user, operator, or the application itself on behalf of them) and at any time (at the session invocation, during the acceptance or during the session).
- Redirecting of multimedia session: the IM subsystem must allow the identification of an alternative destination for an IP multimedia session or individual media of an individual session. Similarly to the capability negotiations, the IM subsystem must allow such redirection to be started from any party (the receiving party, the sending party or the network entities on behalf of them), at any time (prior the set up of the session, during the initial request, during the establishment or during the ongoing session).
- Invoking an IP multimedia session: the user must be able to invoke one or more IP multimedia sessions and to activate concurrent applications inside each multimedia session. To this purpose the identification of the entities will be allowed through the use of both Phone and Internet numbering, depending on the ability of the originating party.
- Handling an incoming session: the terminating entity must be able to identify the session originator, to negotiate the capabilities interacting with the user profile and to decide if accept or reject the session. In particular it must be possible to accept only a subset of the offered media.
- Handling of an ongoing session: the user, as said before, must be able to decide about the addition or the deletion of media components of IP multimedia applications during a session. Moreover it must be possible for the user to suspend and resume at a later time a multimedia session.
- Ending a session: the user must be able to end an ongoing session at any time.
- Local Services: the users must be able to access, while roaming outside the home environment, services of local nature offered by the visited network.

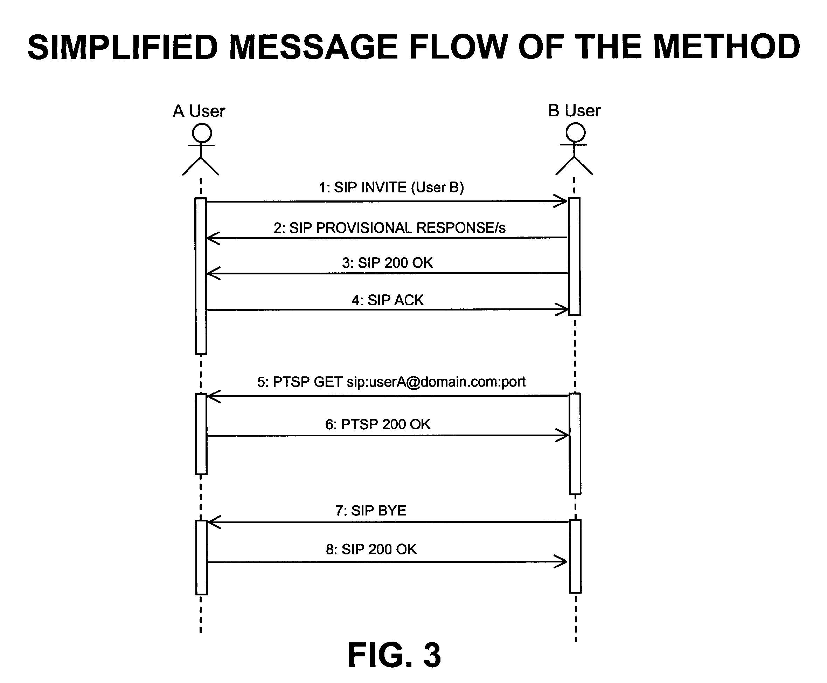

With reference to **fig.3** (the precondition is that User A and User B are provisioned and registered to the IMS) the method of the present invention includes the following steps:
1. SIP INVITE request message addressing User B is sent by User A preferably pushing a button on his cellular phone;
2. one or more SIP provisional response message/s is/are sent back by User B;
3. SIP 200 OK message is sent by User B;
4. SIP ACK message is sent by User A;
5. an unique PTSP GET request message is sent by the invited User B to get one or more large files from the inviter User A. The precise definition of "large file" in the context of the invention is not subjected to a precise bound (e.g.: from 50 to 200 kbytes). Fragmentation of the large file is charged to the TCP transport, so that the PTSP request is dealing with the whole file/s;
6. PTSP 200 OK response message is sent by User A. The body of this message includes the multimedia file transmitted via-socket from User A. User B receives the file already de-fragmented by TCP transport via designated socket.
7. upon reception of the file is completed, a SIP BYE request is sent back by user B;
8. SIP 200 OK response is sent by User A and the SIP session is torn down.

The protocol of **fig.3** is now detailed by means of some practical examples. A first example concerns the transfer of only one file from one user to another (e.g. the two inventors). Bold characters indicate the innovation introduced by the method of the invention. In the following C is the UAC and S is the UAS.

| | |
|---|---|
| C→ S: | INVITE sip:giovanna@ims2.mobilab.it SIP/2.0 |
| User A | Via:SIP/2.0/UDP host.ims2.mobilab.it |
| | From:G. Marfia <sip:gustavo@ims2.mobilab.it> |
| | To:G. DeZen <sip:giovanna@ims2.mobilab.it> |
| | Call-ID:3298420296@ims2.mobilab.it |
| | CSeq:1 INVITE |
| | Subject:ciao |
| | Content-Type:application/sdp |
| | Content-Length: ... |
| | |
| | v=0 |
| | o=gustavo 53655765 2353687637 IN IP4 128.3.4.5 |
| | s=hello |
| | t=0 0 |
| | c=IN IP4 128.3.4.5 |
| | m=file 3456 TCP mpeg/video |
| | a=**connection:server** |
| | a=**size:56154** |
| | |
| User | SIP/2.0 100 Trying |
| S→ C: B | Via:SIP/2.0/UDP host.ims2.mobilab.it |
| | From:G. Marfia <sip:gustavo@ims2.mobilab.it> |
| | To: G. DeZen <sip:giovanna@ims2.mobilab.it>;tag=37462311 |
| | Call-ID:3298420296@ims2.mobilab.it |
| | CSeq:1 INVITE |
| | Content-Length:0 |
| | |
| S→ C: | SIP/2.0 180 Ringing |
| User B | Via:SIP/2.0/UDP host.ims2.mobilab.it |
| | From:G. Marfia <sip:gustavo@ims2.mobilab.it> |
| | To: G. DeZen <sip:giovanna@ims2.mobilab.it>;tag=37462311 |
| | Call-ID:3298420296@ims2.mobilab.it |
| | CSeq:1 INVITE |
| | Content-Length:0 |
| | |
| S→ C: | SIP/2.0 200 OK |
| User B | Via:SIP/2.0/UDP host.ims2.mobilab.it |
| | From:G. Marfia <sip:gustavo@ims2.mobilab.it> |
| | To: G. DeZen <sip:giovanna@ims2.mobilab.it>;tag=37462311 |
| | Call-ID:3298420296@ims2.mobilab.it |
| | CSeq:1 INVITE |
| | Contact:sip:giovanna@ims2.mobilab.it |
| | Content-Type:application/sdp |
| | Content-Length:... |
| | |
| | v=0 |
| | o=giovanna 4858949 4858949 IN IP4 192.1.2.3 |
| | s=l'm on my way |
| | t=0 0 |
| | c=IN IP4 192.1.2.3 |
| | m=file 3456 TCP mpeg/video |
| | a=**connection:client** |
| | a=**size:56154** |
| | |
| C→ S: | ACK sip:giovanna@ims2.mobilab.it SIP/2.0 |
| User A | Via:SIP/2.0/UDP host.ims2.mobilab.it |
| | From:G. Marfia <sip:gustavo@ims2.mobilab.it> |
| | To:G. DeZen <sip:giovanna@ims2.mobilab.it>;tag=37462311 |
| | Call-ID:3298420296@ims2.mobilab.it |
| | CSeq:1 ACK |
| | |
| C→ S: | **GET sip:gustavo@ims2.mobilab.it:3456 PTSP/1.0** |
| User B | **Call-ID**:3298420296@ims2.mobilab.it |
| | |
| S→ C: | **PTSP/1.0 200 OK** |
| User A | **Expires**:3600 |
| | ....................................... |
| | ....................................... |
| | ....................................... |
| | ....................................... |
| | |
| C→ S: | BYE sip:giovanna@ims2.mobilab.it SIP/2.0 |
| User B | Via:SIP/2.0/UDP host.ims2.mobilab.it |
| | From:G. DeZen <sip:giovanna@ims2.mobilab.it>;tag=37462311 |
| | To:G. Marfia <sip:gustavo@ims2.mobilab.it> |
| | Call-ID:3298420296@ims2.mobilab.it |
| | CSeq:2 BYE |
| | |
| In the following second example, instead, more than one file is exchanged: | |
| C→ S: | INVITE sip:giovanna@ims2.mobilab.it SIP/2.0 |
| User A | Via:SIP/2.0/UDP host.ims2.mobilab.it |
| | From:G. Marfia <sip:gustavo@ims2.mobilab.it> |
| | To:G. DeZen <sip:giovanna@ims2.mobilab.it> |
| | Call-ID:3298420296@ims2.mobilab.it |
| | CSeq:1 INVITE |
| | Subject:ciao |
| | Content-Type:application/sdp |
| | Content-Length: ... |
| | |
| | v=0 |
| | o=gustavo 53655765 2353687637 IN IP4 128.3.4.5 |
| | s=hello |
| | t=0 0 |
| | c=IN IP4 128.3.4.5 |
| | m=**files** 3456 TCP multipart/mixed |
| | a=**boundary**:eruhbvr874jvc9cjd990ejc |
| | a=**connection:server** |
| | m=**file** 3456 TCP mpeg/video |
| | a=**size:56154** |
| | m=**file** 3456 TCP mpeg/audio |
| | a=**size:72152** |
| | m=**file** 3456 TCP something/unusual |
| | a=**size:86154** |
| | |
| S→ C: | SIP/2.0 100 Trying |
| User B | Via:SIP/2.0/UDP host.ims2.mobilab.it |
| | From:G. Marfia <sip:gustavo@ims2.mobilab.it> |
| | To: G. DeZen <sip:giovanna@ims2.mobilab.it>;tag=37462311 |
| | Call-ID:3298420296@ims2.mobilab.it |
| | CSeq:1 INVITE |
| | Content-Length:0 |
| | |
| S→ C: | SIP/2.0 180 Ringing |
| User B | Via:SIP/2.0/UDP host.ims2.mobilab.it |
| | From:G. Marfia <sip:gustavo@ims2.mobilab.it> |
| | To:G. DeZen <sip:giovanna@ims2.mobilab.it>;tag=37462311 |
| | Call-ID:3298420296@ims2.mobilab.it |
| | CSeq:1 INVITE |
| | Content-Length:0 |
| | |
| S→ C: | SIP/2.0 200 OK |
| User B | Via:SIP/2.0/UDP host.ims2.mobilab.it |
| | From:G. Marfia <sip:gustavo@ims2.mobilab.it> |
| | To:G. DeZen <sip:giovanna@ims2.mobilab.it>;tag=37462311 |
| | Call-ID:3298420296@ims2.mobilab.it |
| | CSeq:1 INVITE |
| | Contactsip:giovanna@ims2.mobilab.it |
| | Content-Type:application/sdp |
| | Content-Length:... |
| | |
| | v=0 |
| | o=giovanna 4858949 4858949 IN IP4 192.1.2.3 |
| | s=l'm on my way |
| | t=0 0 |
| | c=IN IP4 192.1.2.3 |
| | m=**files** 3456 TCP multipart/mixed |
| | a=**boundary**:fvjneirvjjneorvmweeorvk |
| | a=**connection:client** |
| | m=**file** 3456 TCP mpeg/video |
| | a=s**ize:56154** |
| | m=**file** 3456 TCP mpeg/audio |
| | a=**size:72152** |
| | |
| C→ S: | ACK sip:giovanna@ims2.mobilab.it SIP/2.0 |
| User A | Via:SIP/2.0/UDP host.ims2.mobilab.it |
| | From:G. Marfia <sip:gustavo@ims2.mobilab.it> |
| | To:G. DeZen <sip:giovanna@ims2.mobilab.it>;tag=37462311 |
| | Call-ID:3298420296@ims2.mobilab.it |
| | CSeq:1 ACK |
| | |
| C→ S: | **GET sip:gustavo@ims2.mobilab.it:3456 PTSP/1.0** |
| User B | **Call-ID**:3298420296@ims2.mobilab.it |
| | |
| S→ C: | **PTSP/1.0 200 OK** |
| User A | Expires:3600 |
| | fvjneirvjjneorvmweeorvk |
| | 1^{st} file .......... |
| | ........................................ |
| | ........................................ |
| | ........................................ |
| | ......................................... |
| | fvjneirvjjneorvmweeorvk |
| | 2^{d} file ........... |
| | ........................................ |
| | ......................................... |
| | fvjneirvjjneorvmweeorvk |
| C→ S: | BYE sip:giovanna@ims2.mobilab.it SIP/2.0 |
| User B | Via:SIP/2.0/UDP host.ims2.mobilab.it |
| | From:G. DeZen <sip:giovanna@ims2.mobilab.it>;tag=37462311 |
| | To:G. Marfia <sip:gustavo@ims2.mobilab.it> |
| | Call-ID:3298420296@ims2.mobilab.it |
| | CSeq:2 BYE |

This second example shows how in the exchange of capabilities phase, the receiver is able to decide to accept only some files the sender is offering and the sender shall provide accordingly.
In the final third example, instead, more than one file is sent to more than one recipients:

| | |
|---|---|
| C→ S: | INVITE sip:mvm@ims2.mobilab.it SIP/2.0 |
| User A | Via:SIP/2.0/UDP host.ims2.mobilab.it |
| | From:G. Marfia <sip:gustavo@ims2.mobilab.it> |
| | To:MVM <sip:mvm@ims2.mobilab.it> |
| | Call-ID:3298420296@ims2.mobilab.it |
| | CSeq:1 INVITE |
| | Subject:ciao |
| | Content-Type:multipart/mixed;boundary="eruhbvr874jvc9cjd990e" |
| | Content-Length: ... |
| | |
| | --eruhbvr874jvc9cjd990e |
| | Content-Type:text/plain |
| | |
| | user1@ims2.mobilab.it |
| | user2@ims2.mobilab.it |
| | user3@ims2.mobilab.it |
| | |
| | --eruhbvr874jvc9cjd990e |
| | Content-Type:application/sdp |
| | |
| | v=0 |
| | o=gustavo 53655765 2353687637 IN IP4 128.3.4.5 |
| | s=hello |
| | t=0 0 |
| | c=IN IP4 128.3.4.5 |
| | m=**files** 3456 TCP multipart/mixed |
| | a=**boundary**:eruhbvr874jvc9cjd990ejc |
| | a=**connection:server** |
| | m=**file** 3456 TCP mpeg/video |
| | a=**size:56154** |
| | m=**file** 3456 TCP mpeg/audio |
| | a=**size:72152** |
| | m=**file** 3456 TCP something/unusual |
| | a=**size:86154** |
| | |
| | --eruhbvr874jvc9cjd990e |
| S→ C: | SIP/2.0 100 Trying |
| User B | Via:SIP/2.0/UDP host.ims2.mobilab.it |
| | From:G. Marfia <sip:gustavo@ims2.mobilab.it> |
| | To:MVM <sip:mvm@ims2.mobilab.it>;tag=37462311 |
| | Call-ID:3298420296@ims2.mobilab.it |
| | CSeq:1 INVITE |
| | Content-Length:0 |
| | |
| S→ C: | SIP/2.0 180 Ringing |
| User B | Via:SIP/2.0/UDP host.ims2.mobilab.it |
| | From:G. Marfia <sip:gustavo@ims2.mobilab.it> |
| | To:MVM <sip:mvm@ims2.mobilab.it>;tag=37462311 |
| | Call-ID:3298420296@ims2.mobilab.it |
| | CSeq:1 INVITE |
| | Content-Length:0 |
| | |
| S→ C: | SIP/2.0 200 OK |
| User B | Via:SIP/2.0/UDP host.ims2.mobilab.it |
| | From:G. Marfia <sip:gustavo@ims2.mobilab.it> |
| | To:MVM <sip:mvm@ims2.mobilab.it>;tag=37462311 |
| | Call-ID:3298420296@ims2.mobilab.it |
| | CSeq:1 INVITE |
| | Contact:sip:giovanna@ims2.mobilab.it |
| | Content-Type:application/sdp |
| | Content-Length:... |
| | |
| | v=0 |
| | o=giovanna 4858949 4858949 IN IP4 192.1.2.3 |
| | s=l'm on my way |
| | t=0 0 |
| | c=IN IP4 192.1.2.3 |
| | m=files 3456 TCP multipart/mixed |
| | a=**boundary**:fvjneirvjjneorvmweeorvk |
| | a=**connection:client** |
| | m=**file** 3456 TCP mpeg/video |
| | a=**size:56154** |
| | m=**file** 3456 TCP mpeg/audio |
| | a=**size: 72152** |
| | |
| C→ S: | ACK sip:mvm@ims2.mobilab.it SIP/2.0 |
| User A | Via:SIP/2.0/UDP host.ims2.mobilab.it |
| | From:G. Marfia <sip:gustavo@ims2.mobilab.it> |
| | To:MVM <sip:mvm@ims2.mobilab.it>;tag=37462311 |
| | Call-ID:3298420296@ims2.mobilab.it |
| | CSeq:1 ACK |
| | |
| C→ S: | **GET sip:gustavo@ims2.mobilab.it:3456 PTSP/1.0** |
| User B | **Call-ID**:3298420296@ims2.mobilab.it |
| S→ C: | **PTSP/1.0 200 OK** |
| User A | **Expires:3600** |
| | fvjneirvjjneorvmweeorvk |
| | 1^{st} file..... |
| | .......................................... |
| | ......................................... |
| | ......................................... |
| | ......................................... |
| | fvjneirvjjneorvmweeorvk |
| | 2^{nd} file ..... |
| | ......................................... |
| | ......................................... |
| | fvjneirvjjneorvmweeorvk |
| | |
| C→ S: | BYE sip:mvm@ims2.mobilab.it SIP/2.0 |
| User B | Via:SIP/2.0/UDP host.ims2.mobilab.it |
| | From:MVM < sip:mvm@ims2.mobilab.it>;tag=37462311 |
| | To:G. Marfia <sip:gustavo@ims2.mobilab.it> |
| | Call-ID:3298420296@ims2.mobilab.it |
| | CSeq:2 BYE |

Let's define now the new features that have been introduced to the SDP body of SIP INVITE request in order to support file transfer.
m=**file** <port> TCP <mime/type>
This line in the SDP protocol states that a file is transferred, on the given port, transported by the TCP protocol, with the given mime/type media format. This feature is the definition of the new media type "file".
a=**connection:<behavior>**
This new attribute defines the connection behavior of the endpoint. The <behavior> attribute may assume two values, **server** or **client**, depending on the fact that the endpoint is sending the file (server) or receiving it (client).
a=**size:<size>**
The size attribute states the size of the file that will be transferred.
m=**files** 3456 TCP multipart/mixed
The "files" media type must be always used with the "multipart/mixed" media format and must always be followed by media lines with "file" media type.
a=**boundary**:eruhbvr874jvc9cjd990ejc
The boundary attribute must be set between files when the "files" media type, that states that more than one file will be transferred, is set.
The following is the PTSP request formulated using the HTTP syntax issued by the UAC to pull the file/s from the UAS.
**GET sip:<host>@<domain.com>:<port> PTSP/<version>**
**Call-ID:<call id>**
The <host>@<domain.com> is the IP domain of the PTSP UAS corresponding to the sender. The port value is set to the port where the socket will connect. The version number will be set to 1.0. The <call id> value must be the same of the SIP Call-ID, otherwise the connection will be denied.
**PTSP/1.0 200 OK**
**Expires:3600**
Is the PTSP response indicating the GET request has succeeded, formulated in the HTTP syntax as the request. Any response that does not start with a "PTSP/1.0 200 OK" line will be considered a failure response and the session will be immediately terminated. The file's byte stream will follow the starting line. In case more than one file is sent, a boundary line, as defined in the SDP, will be sent between two files. The "Expires" header defines for how long the content that has been transferred is valid.

To implement file transfer according to the method of the present invention, some modifications must be introduced both in the mobile terminal and the IMS core. Modifications inside the mobile terminal mainly concern: upgrading the involved SIP messages for including the new SDP header fields stated by PTSP in all possible deployments; including the GET request and the associated lines also referred to the response. Modifications inside the IMS core mainly concern the constitution of the MVMS. Based on the given description and considering that techniques to translate signalling protocols like the one of fig.3 into the firmware included in the mobile phone and the network are known and already implemented in the existing PLMNs, the one skilled in the art should use these techniques to impress the new protocol features into the existing firmware.

### USED ACRONYMS

3G - 3^{rd} Generation
3GPP - 3^{rd} Generation Partnership Program
AS - Application Server
CDR - Charging Data Record
CN - Core Network
CS - Circuit Switched
CSCF - Call State Control Function
GGSN - Gateway GPRS Support Node
GPRS - General Packet Radio Service
HSS - Home Subscriber Server
HTTP - Hypertext Transfer Protocol
I-CSCF - Interrogating CSCF
IETF - Internet Engineering Task Force
IM - Instant Messaging
IM-MGW - IP Multimedia Media Gateway Function
**IMS** - IP Multimedia core network Subsystem
ISDN - Integrated Services Digital Network
MCDF - Media Control and Duplication Function
MGCF - Media Gateway Control Function
MIME - Multipurpose Internet Mail Extensions
MMS - Multimedia Messaging Service
MNO - Mobile Network Operator
MRF - Multimedia Resource Function
MRFC - MRF Controller
MRFP - MRF Processor
MSRP - Message Sessions Relay Protocol
PCF - Policy Control Function
P-CSCF - Proxy CSCF
PS - Packet Switched
QoS - Quality of Service
RFC - Request for Comments
RNC - Radio Network Controller
RTP - Real-time Transport Protocol
S-CSCF - Serving CSCF
SDP - Session Description Protocol
SGSN - Serving GPRS Support Node
**SIP** - Session Initiation Protocol
SMS - Short Messaging Service
TCP - Transport Control Protocol
TS - Technical Specification
UAC - User Agent Client
UAS - User Agent Server
UDP - User Datagram Protocol
UE - User Equipment
UMTS - Universal Mobile Telecommunication System URI - Uniform Resources Identifier
URL - Uniform Resources Locator
UTRAN - UMTS Terrestrial Radio Access Network

### REFERENCES

- [TS_22.228]: 3GPP TS 22.228 V 6.5.0, "Service requirements for the Internet Protocol (IP) multimedia core network subsystem"; Stage 1, Release 6, (January 2004).
- [TS_23.002]: 3GPP TS 23.002 V 6.1.0, "Network Architecture", Release 5, (June 2003).
- [TFS_23.228]: 3GPP TS 23.228 V 6.5.0, "IP Multimedia Subsystem (IMS)", Release 6, (March 2004).
- [RFC0768]: IETF RFC 0768 or STD 0006, "UDP: User Datagram Protocol", J. Postel, Aug. 28 1980.
- [RFC0793]: IETF RFC 0793 or STD 0007, "TCP: Transmission Control Protocol", J. Postel, Sept. 01 1981.
- [RFC2327]: IETF RFC 2327 "SDP: Session Description Protocol", April 1998
- [RFC2616]: IETF RFC 2616 "HTTP: Hypertext Transfer Protocol: HTTP/1.1", June 1999.
- [RFC3261]: IETF RFC 3261 "SIP: Sip Initiator Protocol", June 2002.
- [RFC3428]: IETF RFC 3428 "Session Initiation Protocol (SIP) Extension for Instant Messaging", H. Schulzrinne, et al., December 2002.

## Claims

1. Method to transfer media contents in a cellular telephone network from a mobile terminal of an inviter user (A) which sends a SIP INVITE request message to the mobile terminal of at least an invited user (B) in order to set up an IP session for sending media contents through a connection delimited by a TCP socket at the two ends and receiving back a SIP 200 OK response message that request has succeeded, both request and response messages having a session description body including at least a description of the name and formats of the involved media, and the address of the used TCP port, **characterized in that** includes the following steps:
a) including a media content type **file** or **files** in the session description body to indicate that a file or more files is/are sent by the inviter user (A) via designated TCP socket;
b) including a connection attribute in the session description body to define the client or server behaviour of the users (A, B) at the respective sockets;
c) building up by the invited user a get request message (PTSP GET) with the indication of the used TCP socket, the name and version of a minimal protocol (PTSP) corresponding to said get request message (PTSP GET) and relevant responses (PTSP 200 OK), and the same Call-ID value set in the header of the SIP INVITE request message used as temporary authentication key;
d) sending said get request message (PTSP GET) by the invited user (B) that intends to get the whole file from the inviter user (A); and
e) sending back a positive response message (PTSP 200 OK) by the inviter user (A) including said file in the body.

2. The method of the preceding claim, **characterized in that** said positive response message (PTSP 200 OK) includes the same protocol and version of said get request message (PTSP GET) and an expiration value indicating how long the file that is transferred is valid.

3. The method of the preceding claim, **characterized in that** said session description body is based on SDP syntax.

4. The method of the preceding claim, **characterized in that** said connection attribute is described as in the following line:
***a=connection:<behavior>**
where the <behavior> attribute may assume two values, **server** or **client**, depending on the fact that the endpoint user is sending a file or receiving it.

5. The method of claim 3, **characterized in that** said **file** media type is described as in the following line:
m=file <port> TCP <mime/type>
where <mime/type> is the media format.

6. The method of claim 3, **characterized in that** said **files** media type is described as in the following line:
m=files <port> TCP <multipart/mixed>
where <multipart/mixed> is the media format.

7. The method of the preceding claim, **characterized in that** the following line is added up to the SDP body:
a=**boundary:** <string>
to set a separation string between adjacent files.

8. The method of claim 5 or 7, **characterized in that** the following line is included in the SDP body:
a=**size:<size>**
to define the size of a file that will be transferred.

9. The method of the preceding claim when it depends on claim 7, **characterized in that** said SDP body includes as many couple of lines:
m=**file** <port> TCP <mime/type>
a=**size:<size>**
as the number of files to be sent by the inviter user (A).

10. The method of claim 1, **characterized in that** said get request message (PTSP GET) is based on HTTP syntax as follows:
GET sip:<host>@<domain.com>:<port>
Call-ID:<call id>
where: the <port> value is the address of the TCP port of the designated socket, and the <call id> value is the same Call-ID used in said SIP INVITE request message.
